# EUROPEAN PATENT SPECIFICATION

(11) **EP 3 644 495 B1**
(45) Date of publication and mention of the grant of the patent: **08.09.2021**
(21) Application number: 19204227.3
(22) Date of filing: 21.10.2019
(51) Int. Cl.: H02P 6/12

(54) **MOTOR CONTROL DEVICE AND CONTROL METHOD OF MOTOR CONTROL DEVICE**
MOTORSTEUERUNGSVORRICHTUNG UND STEUERUNGSVERFAHREN FÜR EINE MOTORSTEUERUNGSVORRICHTUNG
DISPOSITIF DE COMMANDE DE MOTEUR ET PROCÉDÉ DE COMMANDE D'UN DISPOSITIF DE COMMANDE DE MOTEUR

(30) Priority: 25.10.2018 JP 2018201238
(43) Date of publication of application: 29.04.2020
(73) Proprietor: MITSUBA Corporation, Kiryu-shi Gunma 376-8555 (JP)
(72) Inventor: IKEDA, Takeshi, Kiryu-shi, Gunma 376-8555 (JP); KOBAYASHI, Tomofumi, Kiryu-shi, Gunma 376-8555 (JP)
(74) Representative: Becker & Kurig Partnerschaft Patentanwälte PartmbB

(56) References cited:
- JP-A- 2017 121 105
- JP-A- 2018 050 409
- KR-A- 20170 005 225

## Description

### BACKGROUND OF THE DISCLOSURE

### Technical Field

The disclosure relates to a motor control device and a control method of the motor control device.

### Related Art

A brushless motor includes a stator having three-phase coils U, V, and W, and a rotor having a permanent magnet for a field, and a sensor magnet that rotates together with the rotor is attached to a rotary shaft of the rotor. The sensor magnet is alternately magnetized with S and N poles in a rotation direction. In the vicinity of the sensor magnet, three Hall sensors that detect a rotation position are attached at an interval of 120° in the rotation direction so that switching of magnetic poles of the sensor magnet can be detected.

In a motor control device that performs drive control of the brushless motor, the brushless motor is rotated by outputting a conducting pattern corresponding to each Hall stage to an inverter circuit that drives the brushless motor with reference to switching positions of the three Hall sensors.

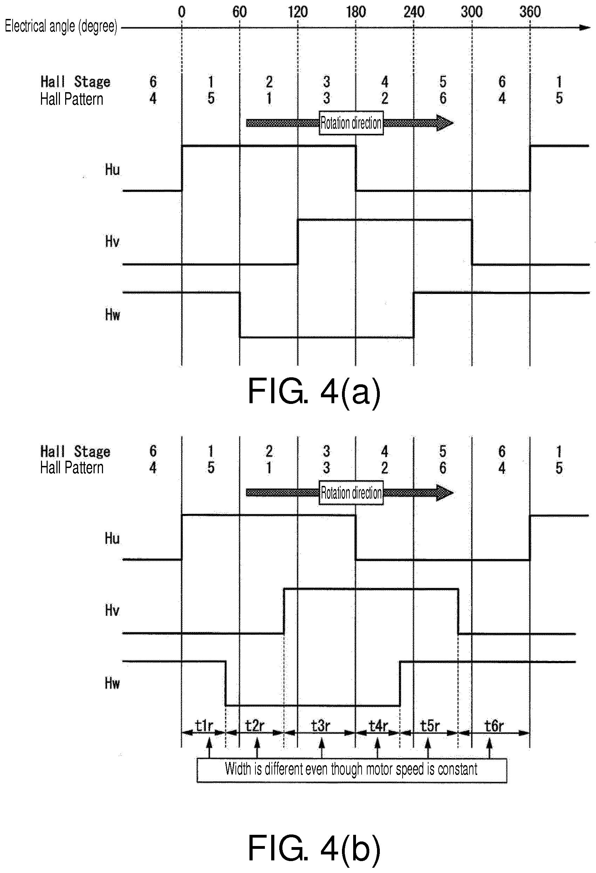

FIGs. 4(a) and 4(b) are diagrams illustrating a time chart of position detection signals Hu, Hv, and Hw of the three Hall sensors at the time of performing drive control of the brushless motor. In FIGs. 4(a) and 4(b), a horizontal axis represents an electrical angle, and a vertical axis represents a voltage level of a position detection signal. As illustrated in FIG. 4(a), the motor control device has a configuration in which a drive signal that switches switching elements of the inverter circuit is output based on a Hall edge configuring each of six Hall stages 1 to 6 represented by a combination of potentials of the position detection signals Hu, Hv, and Hw that are outputs of three sensors. Here, a time between two Hall edges configuring each of the six Hall stages 1 to 6 corresponds to an electrical angle of 60° of a time of a Hall stage.

That is, a time of the Hall stage 1 corresponds to an electrical angle of 60° of a time between a Hall edge that is a rising moment of the position detection signal Hu and a Hall edge that is a falling moment of the position detection signal Hw. In addition, a time of the Hall stage 2 corresponds to an electrical angle of 60° of a time between the Hall edge that is the falling moment of the position detection signal Hw and a Hall edge that is a rising moment of the position detection signal Hv. In addition, a time of the Hall stage 3 corresponds to an electrical angle of 60° of a time between the Hall edge that is the rising moment of the position detection signal Hv and a Hall edge that is a falling moment of the position detection signal Hu. In addition, a time of the Hall stage 4 corresponds to an electrical angle of 60° of a time between the Hall edge that is the falling moment of the position detection signal Hu and a Hall edge that is a rising moment of the position detection signal Hw. In addition, a time of the Hall stage 5 corresponds to an electrical angle of 60° of a time between the Hall edge that is the rising moment of the position detection signal Hw and a Hall edge that is a falling moment of the position detection signal Hv. In addition, a time of the Hall stage 6 corresponds to an electrical angle of 60° of a time between the Hall edge that is the falling moment of the position detection signal Hv and the Hall edge that is the rising moment of the position detection signal Hu.

In addition, in the time of the Hall stage 1, a Hall pattern 5 representing a potential combination of the position detection signals Hu, Hv, and Hw is (H (high), L (low), H). In addition, in the time of the Hall stage 2, a Hall pattern 1 representing a potential combination of the position detection signals Hu, Hv, and Hw is (H, L, L). In addition, in the time of the Hall stage 3, a Hall pattern 3 representing a potential combination of the position detection signals Hu, Hv, and Hw is (H, H, L). In addition, in the time of the Hall stage 4, a Hall pattern 2 representing a potential combination of the position detection signals Hu, Hv, and Hw is (L, H, L). In addition, in the time of the Hall stage 5, a Hall pattern 6 representing a potential combination of the position detection signals Hu, Hv, and Hw is (L, H, H). In addition, in the time of the Hall stage 6, a Hall pattern 4 representing a potential combination of the position detection signals Hu, Hv, and Hw is (L, L, H). In this way, the motor control device has a configuration in which a drive signal that switches switching elements of the inverter circuit is output based on a Hall edge configuring each of the six Hall stages 1 to 6 represented by a potential combination of the position detection signals Hu, Hv, and Hw that are outputs of three sensors.

FIG. 4(a) described above illustrates a case of an ideal state in which the time between two Hall edges configuring each of the six Hall stages 1 to 6 is the electrical angle of 60° of the Hall stage time. However, due to a variation in magnetization of the sensor magnet in the brushless motor, a variation in a mounting position of the Hall sensor, etc., as illustrated in FIG. 4(b), the time between two Hall edges configuring each of the six Hall stages 1 to 6 may not be the electrical angle of 60° of the Hall stage time.
FIG. 4(b) illustrates a case in which the time of each of the Hall stages 1 and 4 is less than the electrical angle of 60°. That is, the time of the Hall stage 1 between the Hall edge that is the rising moment of the position detection signal Hu and the Hall edge that is the falling moment of the position detection signal Hw is an electrical angle t1r less than the electrical angle of 60°. In addition, the time of the Hall stage 4 between the Hall edge that is the falling moment of the position detection signal Hu and the Hall edge that is the rising moment of the position detection signal Hw is an electrical angle t4r less than the electrical angle of 60°.
In this case, the motor control device outputs, for example, a PWM signal (drive signal) in which H and L are repeated, to the inverter circuit according to a conducting pattern that corresponds to the Hall pattern 5 representing the potential combination of the position detection signals Hu, Hv, and Hw during a period of the electrical angle t1r. In addition, the motor control device outputs a PWM signal in which H and L are repeated to the inverter circuit according to a conducting pattern that corresponds to the Hall pattern 2 representing the potential combination of the position detection signals Hu, Hv, and Hw during a period of the electrical angle t4r.
That is, the motor control device rotates the brushless motor by outputting a drive signal to the inverter circuit that drives the brushless motor with reference to a switching position of the three Hall sensors. However, in practice, due to a variation in magnetization of the sensor magnet in the brushless motor, a variation in a mounting position of the Hall sensor, etc., in the motor control device, as illustrated in FIG. 4(b), an actual rotor position and the Hall edge may be shifted from the electrical angle of 60°. In this case, when an output of the drive signal is switched for each Hall edge, there is concern that movement of the brushless motor may be affected to cause generation of vibration or abnormal noise.

Therefore, a motor driving device is required which has a configuration in which the position detection signal is corrected for each Hall edge indicating switching of a Hall stage and a conducting pattern is switched based on the corrected position detection signal.
Moreover, Patent literature 1 and 2 disclose a motor control device that suppresses generation of vibration or abnormal noise. However, since the motor control device disclosed in Patent literature 1 and 2 does not have a configuration in which the position detection signal is corrected for each Hall edge indicating switching of a Hall stage and a conducting pattern is switched based on the corrected position detection signal, generation of vibration or abnormal noise cannot be accurately suppressed.

### [Literature of related art]

### [Patent literature]

[Patent literature 1] Japanese Laid-Open No. 2010-119220
[Patent literature 2] Japanese Patent No. 4724024
[Patent literature 3] Japanese Laid-Open No.2017-121105

### SUMMARY

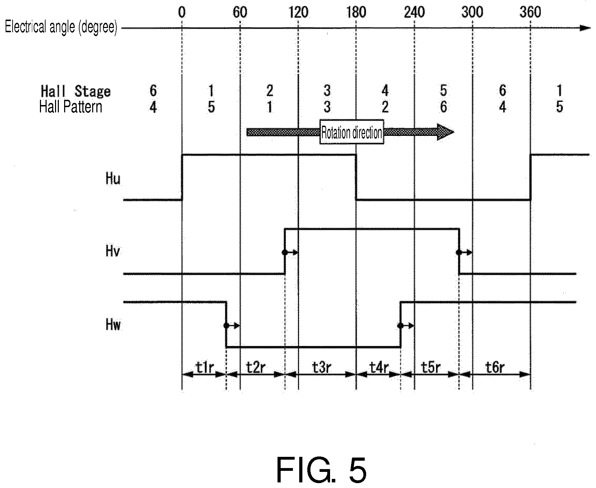

As described above, a motor driving device which has a configuration in which the position detection signal is corrected for each Hall edge indicating switching of a Hall stage and a conducting pattern is switched based on the corrected position detection signal is required. Therefore, as illustrated in FIG. 5, a motor control device which has a function of setting a time of a Hall stage in which an interval between Hall edges (Hall stage time) is narrower than the electrical angle of 60° to the electrical angle of 60° is required. FIG. 5 is a diagram illustrating an example of a time chart of the position detection signals Hu, Hv, and Hw of the three Hall sensors at the time of performing drive control of the brushless motor.
As illustrated in FIG. 5, by correcting a time of a Hall edge, which is a falling moment of the position detection signal Hw, to a position of the electrical angle of 60°, the time of the Hall stage 1 is set to the electrical angle of 60°. In addition, by correcting a time of a Hall edge, which is a rising moment of the position detection signal Hv, to a position of an electrical angle of 120°, the times of the Hall stages 2 and 3 are set to the electrical angle of 60°. In addition, by correcting a time of a Hall edge, which is a rising moment of the position detection signal Hw, to a position of an electrical angle of 240°, the time of the Hall stage 4 is set to the electrical angle of 60°. In addition, by correcting a time of a Hall edge, which is a falling moment of the position detection signal Hv, to a position of an electrical angle of 300°, the times of the Hall stages 5 and 6 are set to the electrical angle of 60°.

An invention described in Patent literature 3 has been made in view of such circumstances, and an objective thereof is to provide a motor control device capable of accurately suppressing generation of vibration or abnormal noise by having a configuration in which a position detection signal is corrected for each Hall edge indicating switching of a Hall stage and a conducting pattern is switched at an electrical angle of 60° based on the corrected position detection signal, and to provide a control method of the motor control device.

However, in the invention described in Patent literature 3, when correction is performed at a low speed at start of movement from stop of a motor, a correction amount is large. Therefore, depending on the degree of acceleration of the motor, there is a possibility that a next Hall pattern may be input to overtake an originally scheduled Hall pattern. For this reason, sensor input correction is not performed, and correction is started at a fixed rotation number (speed) or more.

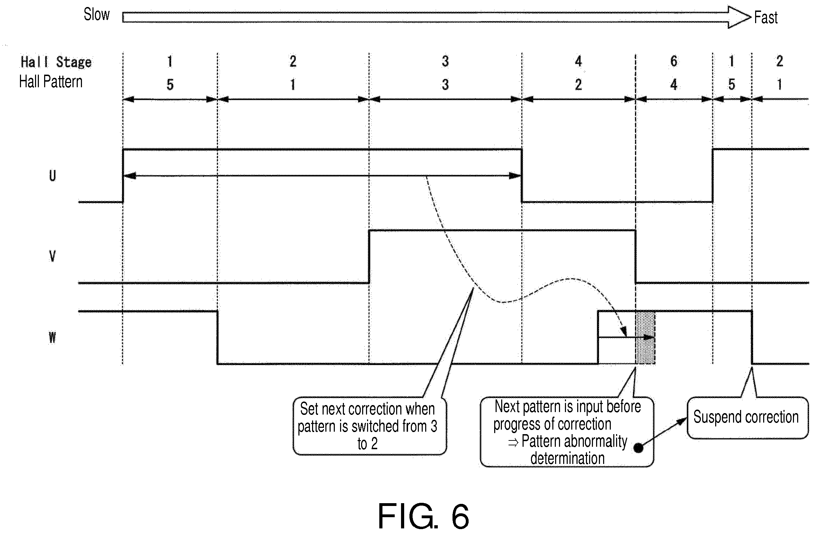

FIG. 6 is a diagram for describing abnormality determination processing performed by a motor control device when an abnormality occurs in a Hall pattern. FIG. 6 illustrates a state in which next correction is set when the Hall pattern is switched from 3 to 2. However, before progress of the correction, so-called Hall pattern overtaking (an abnormality in the Hall pattern) occurs in which a Hall pattern 6 (originally scheduled Hall pattern, see FIG. 5) is not input and a Hall pattern 4 (Hall pattern next to the originally scheduled Hall pattern, see FIG. 5) is input next to a Hall pattern 2.
For example, the rotation number (speed) of the motor may abruptly fluctuate (accelerate) depending on the load fluctuation or setting of a target speed MAP. That is, as illustrated in FIG. 6, when a state in which the rotation number (speed) of the motor rapidly accelerates occurs after start of correction, a Hall pattern abnormality occurs. As illustrated in FIG. 6, when the Hall pattern abnormality occurs, the motor control device determines the occurrence of the abnormality, suspends (stops) correction that has been made, and does not perform correction until certain rotation number is exceeded again to stabilize a motor operation.

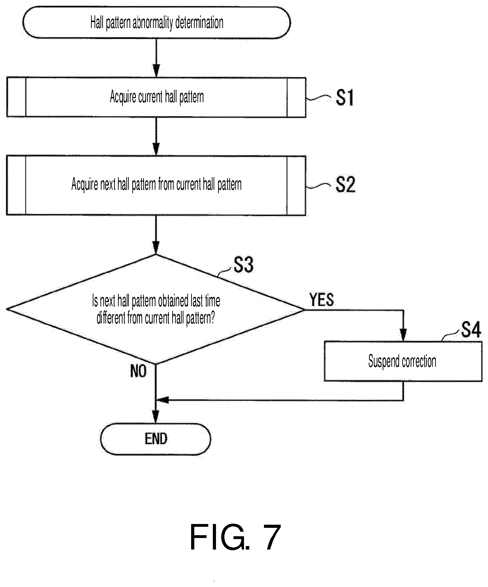

FIG. 7 is a flowchart illustrating the abnormality determination processing performed by the motor control device illustrated in FIG. 6.
The motor control device acquires a current Hall pattern (step S1). Specifically, the motor control device acquires, for example, the Hall pattern 2 illustrated in FIG. 6.
Nextly, the motor control device acquires a next Hall pattern from the current Hall pattern (step S2). Specifically, the motor control device acquires a Hall pattern input next to the Hall pattern 2.
Nextly, the motor control device determines whether the next Hall pattern obtained last time is different from the current Hall pattern (step S3). Specifically, for example, the motor control device determines whether a Hall pattern 6 (hereinafter referred to as a first Hall pattern in the present embodiment) scheduled next to the Hall pattern 2 illustrated in FIG. 6 coincides with the Hall pattern acquired in step S2 this time.
When the two Hall patterns to be determined are different from each other (do not coincide with each other) in step S3 (step S3 - Yes, hereinafter "Yes" is represented by Y), the motor control device proceeds to step S4 and suspends correction. Specifically, for example, as illustrated in FIG. 6, since the Hall pattern 6 scheduled next to the Hall pattern 2 do not coincide with the Hall pattern 4 acquired in step S2 this time, the motor control device proceeds to step S4, and suspends correction. On the other hand, when the two Hall patterns to be determined are not different from each other (coincide with each other) in step S3 (step S3 - No, hereinafter "No" is represented by N), the motor control device continues correction. Specifically, for example, since the Hall pattern 6 scheduled next to the Hall pattern 2 coincides with the Hall pattern 6 acquired in step S2 this time, the motor control device continues correction.

However, since a designed motor characteristic can be obtained by performing correction, when correction is suspended in step S4, a problem that operation may not be performed at a high load arises. Moreover, in a case of a wiper motor, since there is deceleration by a link in the vicinity of a reversing position, operation can be performed even in a high load state. However, when the operation is repeated, movement to a region where deceleration of the link is small is performed, and thus the motor may be suspended at a high load.

The disclosure has been made in view of the above circumstances, and an objective thereof is to provide a motor control device that does not immediately suspend correction (continues correction) in Hall pattern abnormality determination and can suspend correction when a motor is locked or abnormality continuously occurs, and to provide a control method of the motor control device.

According to the invention, there is a motor control device for controlling rotation of a rotor by controlling conduction of three-phase coils of a brushless motor, the motor control device including a plurality of switching elements arranged to be capable of switching a current flowing through the coils, a plurality of sensors provided corresponding to the respective coils to detect a rotation position of the rotor, and a control unit that outputs a drive signal for switching the switching elements based on position detection signals that are outputs of the plurality of sensors. The control unit includes a gate control voltage output unit that outputs a drive signal for switching the switching elements based on the position detection signals that are corrected, and a switching control unit that causes the gate control voltage output unit to output the drive signal based on each of the position detection signals that are corrected. The switching control unit includes a Hall pattern acquisition unit that acquires a next Hall pattern from a predetermined Hall pattern among six Hall patterns being combinations of potentials of the position detection signals that are the outputs of the plurality of sensors, a Hall pattern abnormality determination unit that determines whether the next Hall pattern is different from a first Hall pattern scheduled next to the predetermined Hall pattern, and a Hall pattern abnormality count unit that counts a number of times the next Hall pattern is different from the first Hall pattern. When the number of times the next Hall pattern is different from the first Hall pattern is less than or equal to a predetermined number of times of abnormality and a rotation speed of the rotor is being accelerated, correction is continued, and when the number of times the next Hall pattern is different from the first Hall pattern is larger than the predetermined number of times of abnormality, or when the number of times the next Hall pattern is different from the first Hall pattern is less than or equal to the predetermined number of times of abnormality, and the rotation speed of the rotor is not being accelerated, the correction is suspended.

In addition, an aspect of the disclosure is the above motor control device in which the switching control unit includes a Hall pattern normality count unit that counts the number of times the next Hall pattern coincides with the first Hall pattern, and clears the number of times the next Hall pattern is different from the first Hall pattern when the number of times the next Hall pattern coincides with the first Hall pattern is greater than a predetermined number of times of normality.

In addition, an aspect of the disclosure is the above motor control device in which the control unit includes a gate control voltage output unit that outputs a drive signal for switching the switching elements based on a corrected Hall edge configuring each of the six Hall stages represented by the combinations of the potentials of the position detection signals being the output of the plurality of sensors, a counter value acquisition unit that acquires, from the position detection signals, a counter value being a time of the Hall stage represented by a time between two Hall edges configuring each of the Hall stages, and a switching control unit that uses a value obtained by multiplying a preset correction factor by each counter value of a previous Hall stage as a delay time of each current Hall edge and causes the gate control voltage output unit to output the drive signal based on each Hall edge corrected using the delay time.

In addition, an aspect of the disclosure is the above motor control device in which the control unit includes a reference position detection signal determination unit that sets a Hall edge, a counter value of which is reduced by widening the Hall edge in a rotation direction of the brushless motor, of two Hall edges configuring a Hall stage in which a counter value acquired by the counter value acquisition unit is the smallest, as a reference Hall edge, and determines the position detection signal corresponding to a phase in which the reference Hall edge is present as a reference position detection signal, an average value calculation unit that calculates an average value of counter values for three phases in the rotation direction of the brushless motor of the reference position detection signal, a detection error calculation unit that calculates a detection error that is a difference between the average value and a counter value of each Hall stage, and a correction factor calculation unit that calculates the correction factor for each Hall stage by dividing the detection error by the average value.

In addition, an aspect of the disclosure is the above motor control device in which the control unit includes a storage unit that stores the correction factor obtained by calculation of the correction factor performed before shipment of the motor control device.

According to the invention, there is a control method of a motor control device for controlling rotation of a rotor by controlling conduction of three-phase coils of a brushless motor. The motor control device includes a plurality of switching elements arranged to be capable of switching a current flowing through the coils, a plurality of sensors provided corresponding to the respective coils to detect a rotation position of the rotor, and a control unit that outputs a drive signal for switching the switching elements based on position detection signals that are outputs of the plurality of sensors. The control unit includes a gate control voltage output unit that outputs a drive signal for switching the switching elements based on the position detection signals that are corrected, and a switching control unit that causes the gate control voltage output unit to output the drive signal based on each of the position detection signals that are corrected. The switching control unit includes a Hall pattern acquisition unit that acquires a next Hall pattern from a predetermined Hall pattern among six Hall patterns being combinations of potentials of the position detection signals that are the output of the plurality of sensors, a Hall pattern abnormality determination unit that determines whether the next Hall pattern is different from a first Hall pattern scheduled next to the predetermined Hall pattern, and a Hall pattern abnormality count unit that counts a number of times the next Hall pattern is different from the first Hall pattern. The control method includes a correction suspension process of suspending correction when the number of times the next Hall pattern is different from the first Hall pattern is greater than a predetermined number of times of abnormality, or when a rotation speed of the rotor is not being accelerated even in a case that the number of times the next Hall pattern is different from the first Hall pattern is less than or equal to the predetermined number of times of abnormality.

As described above, according to the disclosure, the switching control unit has a configuration in which correction is continued when the number of times the next Hall pattern is different from the first Hall pattern is less than or equal to a predetermined number of times of abnormality and the rotation speed of the rotor is being accelerated, and correction is suspended when the number of times the next Hall pattern is different from the first Hall pattern is greater than the predetermined number of times of abnormality or when the number of times the next Hall pattern is different from the first Hall pattern is less than or equal to the predetermined number of times of abnormality and the rotation speed of the rotor is not being accelerated. By having this configuration, it is possible to provide a motor control device that does not immediately suspend correction (continues correction) in Hall pattern abnormality determination and can suspend correction when a motor is locked or abnormality continuously occurs, and to provide a control method of the motor control device.

### BRIEF DESCRIPTION OF THE DRAWINGS

FIG. 1 is a block diagram illustrating a control system of a motor control device of the disclosure.
FIG. 2 is a diagram for describing a correction factor calculation method when forward drive control of a brushless motor is performed.
FIG. 3 is a diagram for describing a correction factor calculation method when reverse drive control of the brushless motor is performed.
FIGs. 4(a) and 4(b) are diagrams illustrating a time chart of position detection signals Hu, Hv, and Hw of three Hall sensors when drive control of the brushless motor is performed.
FIG. 5 is a diagram illustrating an example of a time chart of the position detection signals Hu, Hv, and Hw of the three Hall sensors when drive control of the brushless motor is performed.
FIG. 6 is a diagram for describing abnormality determination processing performed by the motor control device when an abnormality occurs in a Hall pattern.
FIG. 7 is a flowchart illustrating the abnormality determination processing illustrated in FIG. 6 and performed by the motor control device.
FIG. 8 is a diagram for describing an abnormality determination processing performed by a switching control unit when an abnormality occurs in a Hall pattern.
FIG. 9 is a flowchart illustrating the abnormality determination processing illustrated in FIG. 8 and performed by the switching control unit.

### DESCRIPTION OF THE EMBODIMENTS

Hereinafter, the disclosure will be described through embodiments of the invention. However, the following embodiments do not limit the invention according to the claims. In addition, not all combinations of features described in the embodiments are essential for the solution of the invention. In the drawings, the same or similar parts may be denoted by the same reference numerals and redundant description may be omitted. In addition, a shape, a size, etc. of an element in the drawings may be exaggerated for a clearer description.

A motor control device in the embodiments is a motor control device that controls rotation of a rotor by controlling conduction of three-phase coils of a brushless motor, including a plurality of switching elements arranged to be capable of switching a current flowing through the coils, a plurality of sensors provided corresponding to the respective coils to detect a rotation position of the rotor, and a control unit that outputs a drive signal for switching the switching elements based on position detection signals that are outputs of the plurality of sensors. In addition, the control unit includes a gate control voltage output unit that outputs a drive signal for switching the switching elements based on a corrected Hall edge configuring each of six Hall stages represented by combinations of potentials of the position detection signals that are the outputs of the plurality of sensors, a counter value acquisition unit that acquires, from the position detection signals, a counter value being a time of a Hall stage represented by a time between two Hall edges configuring each of the Hall stages, and a switching control unit that uses a value obtained by multiplying a preset correction factor by each counter value of a previous Hall stage as a delay time of each current Hall edge and causes the gate control voltage output unit to output the drive signal based on each Hall edge corrected using the delay time. Hereinafter, the motor control device in the embodiments will be described with reference to drawings.

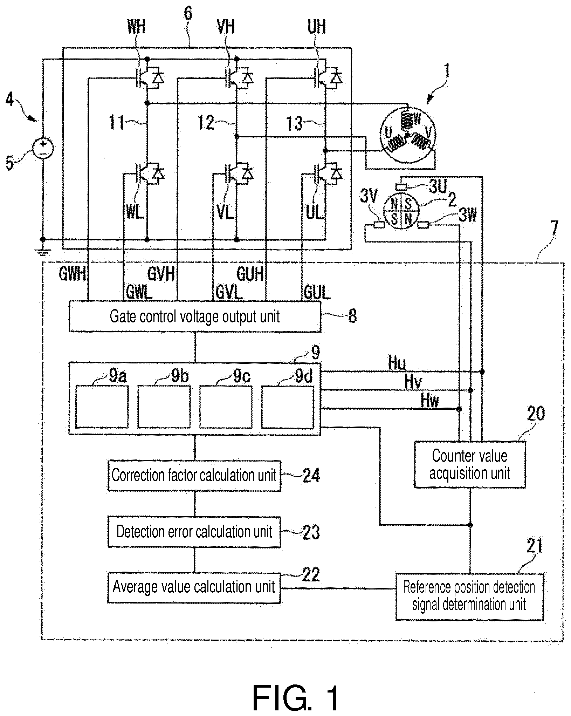

FIG. 1 is a block diagram illustrating a control system of the motor control device of the disclosure. FIG. 1 illustrates a configuration of a brushless motor 1 and a motor control device 4.
The brushless motor 1 includes a stator having three-phase coils U, V, and W, and a rotor having a permanent magnet for a field, and a sensor magnet 2 that rotates together with the rotor is attached to a rotary shaft of the rotor.
The sensor magnet 2 is alternately magnetized with S and N poles in a rotation direction. In the vicinity of the sensor magnet 2, three Hall sensors 3U, 3V, and 3W that detect a rotation position are attached at an interval of 120° in the rotation direction so that switching of magnetic poles of the sensor magnet 2 can be detected.

The motor control device 4 includes an inverter circuit 6 that switches a current flowing from a direct current (DC) power supply 5 to coils U, V, and W, the three Hall sensors 3U, 3V, and 3W, and a control unit 7 that receives an output of each of the Hall sensors 3U, 3V, and 3W and performs switching of the inverter circuit 6.
In the inverter circuit 6, three arms 11, 12, and 13 are connected in parallel to the DC power supply 5. In the first arm 11, a connection point of the two switching elements WH and WL is connected to the coil W. In the second arm 12, a connection point of the two switching elements VH and VL is connected to the coil V. In the third arm 13, a connection point of the two switching elements UH and UL is connected to the coil U.
The coils U, V, and W are, for example, star-connected, and each of ends of the coils U, V, and W on an opposite side from an intersection side is electrically connected to the inverter circuit 6. The Hall sensors 3U, 3V, and 3W included in the motor control device 4 are configured by, for example, Hall ICs, detects a rotation position of the rotary shaft of the rotor when the rotary shaft rotates, and individually outputs position detection signals Hu, Hv, and Hw to the control unit 7 as output signals corresponding to the U phase, V phase, and W phase.

The control unit 7 is a microcomputer including a central processing unit (CPU), a random access memory (RAM), a read only memory (ROM), etc. The control unit 7 includes a gate control voltage output unit 8, a switching control unit 9, a counter value acquisition unit 20, a reference position detection signal determination unit 21, an average value calculation unit 22, a detection error calculation unit 23, and a correction factor calculation unit 24.
The gate control voltage output unit 8 outputs a PWM signal (drive signal) for switching the switching elements WH, WL, VH, VL, UH, and UL based on a corrected Hall edge configuring each of six Hall stages represented by combinations of potentials of the position detection signals Hu, Hv, and Hw corresponding to output of the Hall sensors 3U, 3V, and 3W.
The counter value acquisition unit 20 acquires a counter value, which is a time of a Hall stage represented by a time between two Hall edges configuring each of the Hall stages 1 to 6, from the position detection signals Hu, Hv, and Hw input from the Hall sensors 3U, 3V, and 3W.
The switching control unit 9 recognizes a Hall stage based on the position detection signals Hu, Hv, and Hw input from the Hall sensors 3U, 3V, and 3W, and reads a conducting pattern that corresponds to the Hall stage stored in the ROM of the control unit 7. The switching control unit 9 uses a value obtained by multiplying a preset correction factor by each counter value of a previous (before an electrical angle 360°) Hall stage as a delay time of each current Hall edge, generates, from a conducting pattern, a PWM command signal having a period of an electrical angle of 60° based on each Hall stage corrected by the delay time, and causes the gate control voltage output unit 8 to output the PWM signal having the period of the electrical angle of 60°. In this way, the switching elements WH, WL, VH, VL, UH, and UL are intermittently turned on/off in a period corresponding to each conducting pattern driven by PWM control.
The switching control unit 9 includes a Hall pattern acquisition unit 9a, a Hall pattern abnormality determination unit 9b, a Hall pattern abnormality count unit 9c, and a Hall pattern normality count unit 9d in order to stop or continue the correction. Operations of these units will be described in detail after description of correction is finished.

Here, the preset correction factor is calculated by the reference position detection signal determination unit 21, the average value calculation unit 22, the detection error calculation unit 23, and the correction factor calculation unit 24 before shipment of the motor control device 4, and is stored in the ROM (storage unit) included in the control unit 7.
The reference position detection signal determination unit 21 sets a Hall edge, a counter value of which decreases by widening the Hall edge in a rotation direction of the brushless motor 1, of two Hall edges configuring a Hall stage in which a counter value acquired by the counter value acquisition unit 20 is smallest, as a reference Hall edge, and determines any one of the position detection signals Hu, Hv, and Hw corresponding to a phase in which the reference Hall edge is present as a reference position detection signal.
The average value calculation unit 22 calculates an average value of counter values for the three phases in the rotation direction of the brushless motor 1 of the reference position detection signal determined by the reference position detection signal determination unit 21.
The detection error calculation unit 23 calculates a detection error that is a difference between the average value calculated by the average value calculation unit 22 and the counter value of each Hall stage.
The correction factor calculation unit 24 calculates a correction factor for each Hall stage by dividing the detection error calculated by the detection error calculation unit 23 by the average value calculated by the average value calculation unit 22.
In this way, the switching control unit 9 can use a value obtained by multiplying each counter value of the previous Hall stage by the preset correction factor as each delay time of the current Hall edge, generate a PWM command signal having a period of the electrical angle of 60° based on each Hall edge corrected by the delay time, and output the PWM signal having the period of the electrical angle of 60° to the gate control voltage output unit 8.

Hereinafter, a method for calculating the correction factor will be described with reference to the drawings.

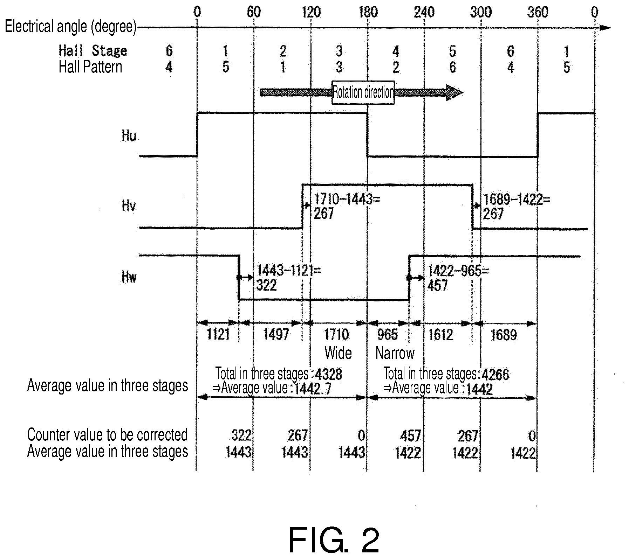

FIG. 2 is a diagram for describing an example of calculation of the correction factor when forward drive control of the brushless motor is performed.
The rotation number of the motor when calculating the correction factor may be an arbitrary rotation number.
The counter value acquisition unit 20 acquires a counter value, which is a time of a Hall stage represented by a time between the two Hall edges configuring each of the Hall stages 1 to 6, from the position detection signals Hu, Hv, and Hw input from the Hall sensors 3U, 3V, and 3W. In the case illustrated in FIG. 2, the counter value acquisition unit 20 acquires 1,121 counts for the Hall stage 1, 1,497 counts for the Hall stage 2, 1,710 counts for the Hall stage 3, 965 counts for the Hall stage 4, 1,612 counts for the Hall stage 5, and 1,689 counts for the Hall stage 6, respectively.

Next, the reference position detection signal determination unit 21 sets a Hall edge, a counter value of which is reduced by widening the Hall edge in the rotation direction of the brushless motor 1, of two Hall edges configuring a Hall stage in which a counter value acquired by the counter value acquisition unit 20 is smallest, as a reference Hall edge, and determines any one of the position detection signals Hu, Hv, and Hw corresponding to a phase in which the reference Hall edge is present as a reference position detection signal.
In the case illustrated in FIG. 2, since the count of the Hall stage 4 may not be increased by widening a falling position of the position detection signal Hu included in the Hall stage 4 which is the smallest of the six counter values in the rotation direction, the reference position detection signal determination unit 21 sets the falling position of the position detection signal Hu as a reference Hall edge, and determines the position detection signal Hu corresponding to a phase in which the reference Hall edge is present as a reference position detection signal.

Next, the average value calculation unit 22 calculates an average value of the counter values for the three phases in the rotation direction of the brushless motor 1 of the reference position detection signal determined by the reference position detection signal determination unit 21.
In the case illustrated in FIG. 2, the average value calculation unit 22 calculates an average value 1,442.7 from a total value 4,328 in three stages (Hall stages 1 to 3) in which the position detection signal Hu is at an H level and calculates an average value 1,422 from a total value 4,266 in three stages (Hall stages 4 to 6) in which the position detection signal Hu is at an L level among counter values for three phases in a rotation direction of the position detection signal Hu.

Next, the detection error calculation unit 23 calculates a detection error that is a difference between the average value calculated by the average value calculation unit 22 and a counter value of each Hall stage.
In the case illustrated in FIG. 2, the detection error calculation unit 23 calculates a detection error 322 of the Hall stage 1 by subtracting a counter value 1,121 of the Hall stage 1 from an average value 1,443 calculated by the average value calculation unit 22 (value obtained by rounding up the decimal point of 1,442.7).
In addition, the detection error calculation unit 23 calculates a detection error 267 of the Hall stage 2 by subtracting the average value 1,443 calculated by the average value calculation unit 22 from a counter value 1,710 of the Hall stage 3.
In addition, the detection error calculation unit 23 calculates a detection error 457 of the Hall stage 4 by subtracting a counter value 965 of the Hall stage 4 from an average value 1,422 calculated by the average value calculation unit 22.
In addition, the detection error calculation unit 23 calculates a detection error 267 of the Hall stage 5 by subtracting the average value 1,422 calculated by the average value calculation unit 22 from a counter value 1,689 of the Hall stage 6.
In this way, the detection error calculation unit 23 calculates the detection error of each Hall stage so that the counter values of the Hall stages 1 to 6 are the same.

Next, the correction factor calculation unit 24 calculates a correction factor for each Hall stage by dividing the detection error calculated by the detection error calculation unit 23 by the average value calculated by the average value calculation unit 22.
In the case illustrated in FIG. 2, the correction factor calculation unit 24 calculates a correction factor of the Hall stage 1 (in this case, 322/1,443) by dividing the detection error 322 calculated by the detection error calculation unit 23 by the average value 1,443 calculated by the average value calculation unit 22.
In addition, the correction factor calculation unit 24 calculates a correction factor of the Hall stage 2 (in this case, 267/1,443) by dividing the detection error 267 calculated by the detection error calculation unit 23 by the average value 1,443 calculated by the average value calculation unit 22.
In addition, the correction factor calculation unit 24 calculates a correction factor of the Hall stage 3 (in this case, 0/1,443) by dividing the detection error 0 calculated by the detection error calculation unit 23 by the average value 1,443 calculated by the average value calculation unit 22.
In addition, the correction factor calculation unit 24 calculates a correction factor of the Hall stage 4 (in this case, 457/1,422) by dividing the detection error 457 calculated by the detection error calculation unit 23 by the average value 1,422 calculated by the average value calculation unit 22.
In addition, the correction factor calculation unit 24 calculates a correction factor of the Hall stage 5 (in this case, 267/1,422) by dividing the detection error 267 calculated by the detection error calculation unit 23 by the average value 1,422 calculated by the average value calculation unit 22.
In addition, the correction factor calculation unit 24 calculates a correction factor of the Hall stage 6 (in this case, 0/1,422) by dividing the detection error 0 calculated by the detection error calculation unit 23 by the average value 1,422 calculated by the average value calculation unit 22.
As described above, the correction factor calculation unit 24 calculates the correction factor so that the respective counter values of the respective Hall stages 1 to 6 are the same, and stores the correction factor at the time of performing forward drive control of the brushless motor 1 in the ROM included in the control unit 7.

In this way, the switching control unit 9 can perform forward drive control of the brushless motor 1 by using a value obtained by multiplying a preset correction factor by each counter value of a previous Hall stage as a delay time of each current Hall edge, generating a PWM command signal having a period of an electrical angle of 60° based on each Hall stage corrected by the delay time, and causing the gate control voltage output unit 8 to output the PWM signal having the period of the electrical angle of 60°.
For example, in the case of the example illustrated in FIG. 2, the switching control unit 9 uses a counter value 223 obtained by multiplying a preset correction factor (322/1,443 in the above description) by a previous counter value of the Hall stage 1 (counter value 1,000) as a delay time of a fall time (current Hall edge) of the position detection signal Hw included in the Hall stage 1, and generates a PWM command signal based on a Hall edge corrected by the delay time.
In addition, in the case of the example illustrated in FIG. 2, the switching control unit 9 uses a counter value obtained by multiplying a previous counter value of the Hall stage 2 by 267/1,443 described above as a delay time of a rising moment of the position detection signal Hv included in the Hall stage 2, and generates a PWM command signal based on a Hall edge corrected by the delay time.
In addition, in the case of the example illustrated in FIG. 2, the switching control unit 9 uses a counter value obtained by multiplying a previous counter value of the Hall stage 3 by 0/1,443 described above as a delay time 0 of a falling moment of the position detection signal Hu included in the Hall stage 3, and generates a PWM command signal based on a Hall edge corrected by the delay time 0, that is, not corrected.
In addition, in the case of the example illustrated in FIG. 2, the switching control unit 9 uses a counter value obtained by multiplying a previous counter value of the Hall stage 4 by 457/1,422 described above as a delay time of a rising moment of the position detection signal Hw included in the Hall stage 4, and generates a PWM command signal based on a Hall edge corrected by the delay time.
In addition, in the case of the example illustrated in FIG. 2, the switching control unit 9 uses a counter value obtained by multiplying a previous counter value of the Hall stage 5 by 267/1,422 described above as a delay time of a falling moment of the position detection signal Hv included in the Hall stage 5, and generates a PWM command signal based on a Hall edge corrected by the delay time.
In addition, in the case of the example illustrated in FIG. 2, the switching control unit 9 uses a counter value obtained by multiplying a previous counter value of the Hall stage 6 by 0/1,422 described above as a delay time 0 of a rising moment of the position detection signal Hu included in the Hall stage 6, and generates a PWM command signal based on a Hall edge corrected by the delay time 0, that is, not corrected.

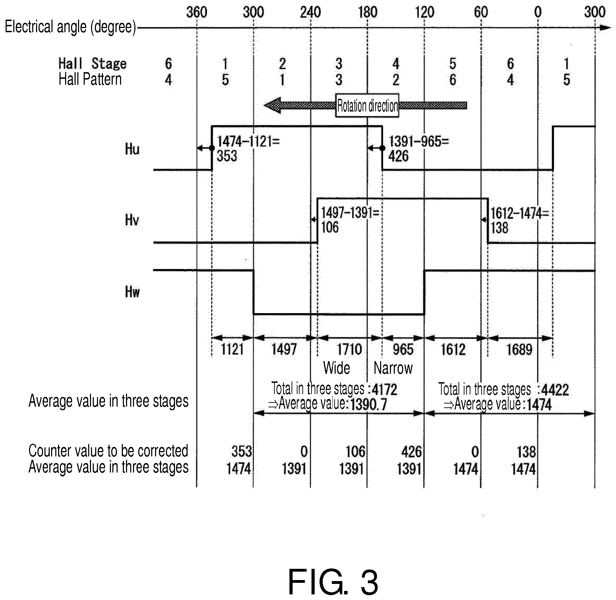

FIG. 3 is a diagram for describing a correction factor calculation method when reverse drive control of the brushless motor is performed.
The rotation number of the motor when calculating the correction factor may be an arbitrary rotation number.
The counter value acquisition unit 20 acquires a counter value, which is a time of a Hall stage represented by a time between the two Hall edges configuring each of the Hall stages 1 to 6, from the position detection signals Hu, Hv, and Hw input from the Hall sensors 3U, 3V, and 3W. In the case illustrated in FIG. 3, the counter value acquisition unit 20 acquires 1,689 counts for the Hall stage 6, 1,612 counts for the Hall stage 5, 965 counts for the Hall stage 4, 1,710 counts for the Hall stage 3, 1,497 counts for the Hall stage 2, and 1,121 counts for the Hall stage 1, respectively.

Next, the reference position detection signal determination unit 21 sets a Hall edge, a counter value of which is reduced by widening the Hall edge in the rotation direction of the brushless motor 1, of two Hall edges configuring a Hall stage in which a counter value acquired by the counter value acquisition unit 20 is smallest, as a reference Hall edge, and determines any one of the position detection signals Hu, Hv, and Hw corresponding to a phase in which the reference Hall edge is present as a reference position detection signal.
In the case illustrated in FIG. 3, since the count of the Hall stage 4 may not be increased by widening a falling position of the position detection signal Hw included in the Hall stage 4 which is the smallest of the six counter values in the rotation direction, the reference position detection signal determination unit 21 sets the falling position of the position detection signal Hw as a reference Hall edge, and determines the position detection signal Hw corresponding to a phase in which the reference Hall edge is present as a reference position detection signal.

Next, the average value calculation unit 22 calculates an average value of the counter values for the three phases in the rotation direction of the brushless motor 1 of the reference position detection signal determined by the reference position detection signal determination unit 21.
In the case illustrated in FIG. 3, the average value calculation unit 22 calculates an average value 1,474 from a total value 4,422 in three stages (Hall stages 1, 6, and 5) in which the position detection signal Hw is at an H level and calculates an average value 1,390.7 from a total value 4,172 in three stages (Hall stages 2 to 4) in which the position detection signal Hw is at an L level among counter values for three phases in a rotation direction of the position detection signal Hw.

Next, the detection error calculation unit 23 calculates a detection error that is a difference between the average value calculated by the average value calculation unit 22 and a counter value of each Hall stage.
In the case illustrated in FIG. 3, the detection error calculation unit 23 calculates a detection error 353 of the Hall stage 1 by subtracting a counter value 1,121 of the Hall stage 1 from the average value 1,474 calculated by the average value calculation unit 22.
In addition, the detection error calculation unit 23 calculates a detection error 106 of the Hall stage 3 by subtracting the average value 1,391 (value obtained by rounding up the decimal point of 1,390.7) calculated by the average value calculation unit 22 from a counter value 1,497 of the Hall stage 2.
In addition, the detection error calculation unit 23 calculates a detection error 426 of the Hall stage 4 by subtracting a counter value 965 of the Hall stage 4 from an average value 1,391 calculated by the average value calculation unit 22.
In addition, the detection error calculation unit 23 calculates a detection error 138 of the Hall stage 6 by subtracting the average value 1,474 calculated by the average value calculation unit 22 from the counter value 1,612 of the Hall stage 5.
In this way, the detection error calculation unit 23 calculates the detection error of each Hall stage so that the counter values of the Hall stages 1 to 6 are the same.

Next, the correction factor calculation unit 24 calculates a correction factor for each Hall stage by dividing the detection error calculated by the detection error calculation unit 23 by the average value calculated by the average value calculation unit 22.
In the case illustrated in FIG. 3, the correction factor calculation unit 24 calculates a correction factor of the Hall stage 1 (in this case, 353/1,474) by dividing the detection error 353 calculated by the detection error calculation unit 23 by the average value 1,474 calculated by the average value calculation unit 22.
In addition, the correction factor calculation unit 24 calculates a correction factor of the Hall stage 2 (in this case, 0/1,391) by dividing the detection error 0 calculated by the detection error calculation unit 23 by the average value 1,391 calculated by the average value calculation unit 22.
In addition, the correction factor calculation unit 24 calculates a correction factor of the Hall stage 3 (in this case, 106/1,391) by dividing the detection error 106 calculated by the detection error calculation unit 23 by the average value 1,391 calculated by the average value calculation unit 22.
In addition, the correction factor calculation unit 24 calculates a correction factor of the Hall stage 4 (in this case, 426/1,391) by dividing the detection error 426 calculated by the detection error calculation unit 23 by the average value 1,391 calculated by the average value calculation unit 22.
In addition, the correction factor calculation unit 24 calculates a correction factor of the Hall stage 5 (in this case, 0/1,474) by dividing the detection error 0 calculated by the detection error calculation unit 23 by the average value 1,474 calculated by the average value calculation unit 22.
In addition, the correction factor calculation unit 24 calculates a correction factor of the Hall stage 6 (in this case, 138/1,474) by dividing the detection error 138 calculated by the detection error calculation unit 23 by the average value 1,474 calculated by the average value calculation unit 22.
As described above, the correction factor calculation unit 24 calculates the correction factor so that the respective counter values of the respective Hall stages 1 to 6 are the same, and stores the correction factor at the time of performing reverse drive control of the brushless motor 1 in the ROM included in the control unit 7.

In this way, the switching control unit 9 can perform reverse drive control of the brushless motor 1 by using a value obtained by multiplying a preset correction factor by each counter value of a previous Hall stage as a delay time of each current Hall edge, generating a PWM command signal having a period of an electrical angle of 60° based on each Hall stage corrected by the delay time, and causing the gate control voltage output unit 8 to output the PWM signal having the period of the electrical angle of 60°.
For example, in the case of the example illustrated in FIG. 3, the switching control unit 9 uses a counter value obtained by multiplying a preset correction factor (353/1,474 in the above description) by a previous counter value of the Hall stage 1 as a delay time of a fall time (current Hall edge) of the position detection signal Hu included in the Hall stage 1, and generates a PWM command signal based on a Hall edge corrected by the delay time.
In addition, in the case of the example illustrated in FIG. 3, the switching control unit 9 uses a counter value obtained by multiplying a previous counter value of the Hall stage 2 by 0/1,391 described above as a delay time 0 of a rising moment of the position detection signal Hw included in the Hall stage 2, and generates a PWM command signal based on a Hall edge corrected by the delay time 0, that is, not corrected.
In addition, in the case of the example illustrated in FIG. 3, the switching control unit 9 uses a counter value obtained by multiplying a previous counter value of the Hall stage 3 by 106/1,391 described above as a delay time of a falling moment of the position detection signal Hv included in the Hall stage 3, and generates a PWM command signal based on a Hall edge corrected by the delay time.
In addition, in the case of the example illustrated in FIG. 3, the switching control unit 9 uses a counter value obtained by multiplying a previous counter value of the Hall stage 4 by 426/1,391 described above as a delay time of a rising moment of the position detection signal Hu included in the Hall stage 4, and generates a PWM command signal based on a Hall edge corrected by the delay time.
In addition, in the case of the example illustrated in FIG. 3, the switching control unit 9 uses a counter value obtained by multiplying a previous counter value of the Hall stage 5 by 0/1,474 described above as a delay time 0 of a falling moment of the position detection signal Hw included in the Hall stage 5, and generates a PWM command signal based on a Hall edge corrected by the delay time 0, that is, not corrected.
In addition, in the case of the example illustrated in FIG. 3, the switching control unit 9 uses a counter value obtained by multiplying a previous counter value of the Hall stage 6 by 138/1,474 described above as a delay time of a rising moment of the position detection signal Hu included in the Hall stage 6, and generates a PWM command signal based on a Hall edge corrected by the delay time.

As described above, according to the present embodiment, it is possible to provide the motor control device 4 capable of accurately suppressing generation of vibration or abnormal noise by having the switching control unit 9 that corrects the position detection signal for each Hall edge indicating switching of a Hall stage and switches a conducting pattern at the electrical angle of 60° based on the corrected position detection signal, and the control method for the motor control device 4.

However, in the motor control device 4 that has been described above, a motor characteristic in design can be obtained by performing correction. Therefore, when correction is suspended in step S4 in FIG. 7, a problem that operation may not be performed at high load arises. The disclosure has been made in view of such circumstances, and an object thereof is to provide a motor control device that does not immediately suspend correction (continuing correction) in Hall pattern abnormality determination and can suspend correction when the motor is locked or abnormality continuously occurs, and a control method for the motor control device. For this reason, in the motor control device 4 of the disclosure, to suspend or continue correction, the switching control unit 9 includes the Hall pattern acquisition unit 9a, the Hall pattern abnormality determination unit 9b, the Hall pattern abnormality count unit 9c, and the Hall pattern normality count unit 9d.

The Hall pattern acquisition unit 9a acquires a next Hall pattern from a predetermined Hall pattern among six Hall patterns being combinations of potentials of position detection signals that are outputs of the plurality of sensors.
The Hall pattern abnormality determination unit 9b determines whether the next Hall pattern is different from the first Hall pattern scheduled after the predetermined Hall pattern.
The Hall pattern abnormality count unit 9c counts the number of times the next Hall pattern is different from the first Hall pattern.
The Hall pattern normality count unit 9d counts the number of times the next Hall pattern coincides with the first Hall pattern.

By having this configuration, the switching control unit 9 continues correction when the number of times the next Hall pattern is different from the first Hall pattern is less than or equal to a predetermined number of times of abnormality and the rotation speed of the rotor is accelerating, and suspends correction when the number of times the next Hall pattern is different from the first Hall pattern is greater than the predetermined number of times of abnormality or when the number of times the next Hall pattern is different from the first Hall pattern is less than or equal to the predetermined number of times of abnormality and the rotation speed of the rotor is not accelerating. By having this configuration, the motor control device 4 does not immediately suspend correction (continues correction) in Hall pattern abnormality determination and can suspend correction when the motor is locked or abnormality continuously occurs.

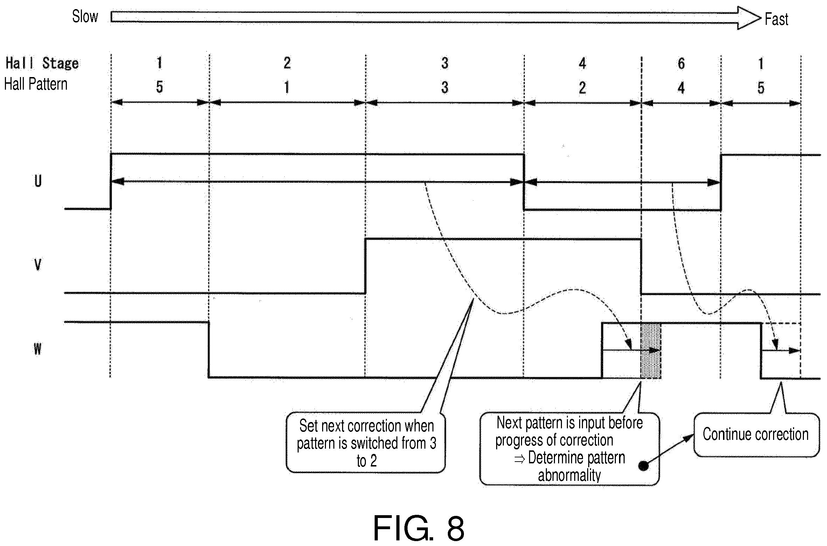

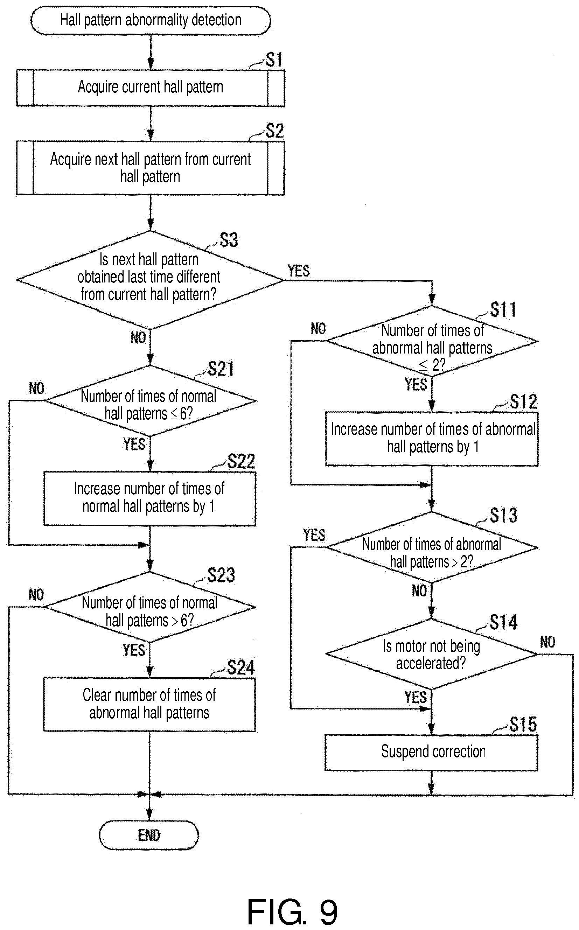

Hereinafter, processing of suspending or continuing correction performed by the switching control unit 9 is described in detail with reference to FIG. 8 and FIG. 9.
FIG. 8 is a diagram for describing an abnormality determination processing performed by the switching control unit 9 when an abnormality occurs in a Hall pattern. FIG. 8 illustrates a state in which next correction is set when the Hall pattern is switched from 3 to 2. However, before progress of correction, so-called Hall pattern overtaking (an abnormality in the Hall pattern) occurs such that the Hall pattern 6 (originally scheduled Hall pattern, see FIG. 5) is not input and the Hall pattern 4 (Hall pattern next to the originally scheduled Hall pattern, see FIG. 5) is input next to the Hall pattern 2.
For example, the rotation number (speed) of the motor may abruptly fluctuate (accelerate) depending on the load fluctuation or setting of a target speed MAP. That is, as illustrated in FIG. 8, when a state in which the rotation number (speed) of the motor rapidly accelerates occurs after start of correction, a Hall pattern abnormality occurs. As illustrated in FIG. 8, the switching control unit 9 has a configuration in which when Hall pattern abnormality occurs, occurrence of the abnormality is determined, and correction is not immediately suspended (correction is continued).

FIG. 9 is a flowchart illustrating the abnormality determination processing performed by the switching control unit 9 illustrated in FIG. 8.
The Hall pattern acquisition unit 9a acquires a current Hall pattern (step S1). Specifically, the Hall pattern acquisition unit 9a, for example, acquires the Hall pattern 2 illustrated in FIG. 8.

Next, the Hall pattern acquisition unit 9a acquires a next Hall pattern from the current Hall pattern (step S2). Specifically, the Hall pattern acquisition unit 9a acquires a Hall pattern input next to the Hall pattern 2.

Next, the Hall pattern abnormality determination unit 9b determines whether the next Hall pattern obtained last time is different from a current Hall pattern (step S3). Specifically, for example, the Hall pattern abnormality determination unit 9b determines whether the Hall pattern 6 (hereinafter referred to as a first Hall pattern in the present embodiment) scheduled next to the Hall pattern 2 illustrated in FIG. 8 coincides with the Hall pattern acquired in step S2 this time.

When the two Hall patterns to be determined are different from each other (do not coincide with each other) in step S3 (step S3 - Yes, hereinafter "Yes" is represented by Y), the Hall pattern abnormality determination unit 9b proceeds to step S11. Specifically, for example, as illustrated in FIG. 8, since the Hall pattern 6 scheduled next to the Hall pattern 2 do not coincide with the Hall pattern 4 acquired in step S2 this time, the Hall pattern abnormality determination unit 9b proceeds to step S11.
On the other hand, when the two Hall patterns to be determined are not different from each other (coincide with each other) in step S3 (step S3 - No, hereinafter "No" is represented by N), the Hall pattern abnormality determination unit 9b proceeds to step S21. Specifically, since the Hall pattern 6 scheduled next to the Hall pattern 2 coincides with the Hall pattern 6 acquired in step S2 this time, the Hall pattern abnormality determination unit 9b, for example, proceeds to step S21.

When the Hall pattern abnormality determination unit 9b determines in step S3 that the two Hall patterns to be determined are different from each other (coincide with each other) (step S3 - Y), the Hall pattern abnormality count unit 9c determines whether the number of times of abnormality is less than or equal to a predetermined number of times of abnormality (two in the present embodiment) (step S11).
When the number of times of abnormality is less than or equal to the predetermined number of times of abnormality (step S11 - Y), the Hall pattern abnormality count unit 9c increments the number of times of abnormality by 1, and proceeds to step S13 (step S12).
On the other hand, when the number of times of abnormality is greater than the predetermined number of times of abnormality (step S11 - N), the Hall pattern abnormality count unit 9c proceeds to step S13.

The Hall pattern abnormality count unit 9c determines whether the number of times of abnormality is greater than a predetermined number of times of abnormality (two in the present embodiment) (step S13).
When the number of times of abnormality is greater than the predetermined number of times of abnormality (step S13 - Y), the Hall pattern abnormality count unit 9c proceeds to step S15 and suspends correction (step S15). On the other hand, when the number of times of abnormality less than or equal to the predetermined number of times of abnormality (step S13 - N), the Hall pattern abnormality count unit 9c proceeds to step S14.

The switching control unit 9 determines whether the motor (rotation speed of the rotor) is not being accelerated (step S14).
When the motor (rotation speed of the rotor) is not being accelerated (step S14 - Y), the switching control unit 9 proceeds to step S15 and suspends correction (step S15). On the other hand, when the motor (rotation speed of the rotor) is being accelerated (step S14 - N), the switching control unit 9 does not suspend correction (continues correction).

On the other hand, when the Hall pattern abnormality determination unit 9b determines in step S3 that the two Hall patterns to be determined are not different from each other (coincide with each other) (step S3 - N), the Hall pattern normality count unit 9d determines whether the number of times of normality is less than or equal to a predetermined number of times of normality (six in the present embodiment) (step S21).
When the number of times of normality is less than or equal to a predetermined number of times of normality (step S21 - Y), the Hall pattern normality count unit 9d increments the number of times of normality by 1 and proceeds to step S23 (step S22).
On the other hand, when the number of times of normality is greater than the predetermined number of times of normality (step S21 - N), the Hall pattern normality count unit 9d proceeds to step S23.

The Hall pattern normality count unit 9d determines whether the number of times of normality is greater than the predetermined number of times of normality (six in the present embodiment) (step S23).
When the number of times of normality is greater than the predetermined number of times of normality (step S23 - Y), the Hall pattern normality count unit 9d proceeds to step S24 and clears the number of times of abnormality. On the other hand, when the number of times of normality is less than or equal to the predetermined number of times of normality (step S23 - N), the Hall pattern normality count unit 9d does not clear the number of times of abnormality.

As described above, the switching control unit 9 does not suspend correction when Hall pattern abnormality occurs. That is, correction is continued without being suspended by operations in step S11, step S12, step S13-N and step S14-N of the steps S11 to S15. The operations in steps S21 to S24 correspond to error clear processing when the Hall pattern is normal.

However, since it is necessary to suspend correction when the motor is locked, a correction suspension condition is added. That is, the correction suspension condition is added by operations in step S13-Y and step S14-Y of step S13 and Step s14, and correction suspension is performed (step S15). The motor lock refers to a state in which the brushless motor 1 is not rotating despite being energized.
As a reason for adding this correction suspension condition, a problem of a case where correction is continued when the Hall pattern is abnormal is considered. Correction overtaking occurs even when the motor is locked. Thus, when correction is continued, a problem that the motor lock may not be determined arises.
As a reason for occurrence of correction overtaking when the motor is locked, the following reason is considered. Since the amount of correction increases as in the case of startup due to a decrease in speed, that is, the motor speed fluctuates due to load fluctuation, overtaking occurs due to an increase in motor speed.

In addition, motor lock determination refers to motor lock determination when the motor speed 0 is continued for a certain time to set the motor speed to 0 at the time of suspension of correction. That is, when correction is continued, overtaking of correction occurs even when the motor is locked, which causes a problem that motor lock determination may not be performed.

As a countermeasure against this problem, correction suspension conditions (the following (1) and (2)) are added by operations in step S13-Y and step S14-Y as a condition to suspend correction when the motor is locked.
(1) When the motor is locked, the motor is at a constant speed or decelerated. That is, when the motor is not being accelerated, correction is suspended. This condition corresponds to step S14-Y.
(2) When the Hall pattern is abnormal, the motor is output based on the Hall pattern at the time, and thus the motor may reverse when the motor is locked. That is, correction is suspended when Hall pattern abnormality continuously occurs. This condition corresponds to step S13-Y.

As described above, the switching control unit 9 of the disclosure has a configuration in which correction is continued even when correction is overtaken (even when Hall pattern abnormality occurs) and correction is prohibited (suspended) when the motor is locked or abnormality continuously occurs (including prevention of reverse rotation).

That is, even when a Hall pattern input that overtakes correction occurs, since correction is continued, the motor is difficult to suspend even at a high load. In addition, even when correction is overtaken, since operation can be continued, correction at the time of low rotation can be performed. When correction at the time of low rotation can be performed, it is effective in reducing motor operating noise or improving a motor characteristic at low rotation. Furthermore, when a sensor variation is large (the correction amount is large), there is a high possibility that correction will be overtaken, and thus processing of the disclosure is advantageous.

The motor control device 4 in the embodiment described above may be realized by a computer. In this case, the motor control device 4 may be realized by recording a program for realizing this function on a computer-readable recording medium, and causing a computer system to read and execute the program stored in the recording medium. It is presumed that the "computer system" mentioned here includes an operating system (OS) and hardware such as a peripheral device. In addition, the "computer-readable recording medium" refers to a portable medium such as a flexible disk, a magneto-optical disc, a ROM, or a CD-ROM, or a storage device such as a hard disk built in the computer system. Furthermore, the "computer-readable recording medium" may include a recording medium that dynamically holds a program for a short time as a communication line in a case of transmitting a program via a network such as the Internet or a communication line such as a telephone line and a recording medium that holds a program for a certain period of time as a volatile memory inside the computer system that serves as a server or a client in the case. In addition, the program may correspond to a program for realizing a part of the above-described function, correspond to a program that can realize the function in combination with a program previously recorded in the computer system, or correspond to a program realized using a programmable logic device such as a field programmable gate array (FPGA).

### [Description of the Symbols]

- 1: brushless motor
- 3U, 3V, 3W: Hall sensor
- 4: motor control device
- 6: inverter circuit
- 7: control unit
- 8: gate control voltage output unit
- 9: switching control unit
- 9a: Hall pattern acquisition unit
- 9b: Hall pattern abnormality determination unit
- 9c: Hall pattern abnormality count unit
- 9d: Hall pattern normality count unit
- 20: counter value acquisition unit
- 21: reference position detection signal determination unit
- 22: average value calculation unit
- 23: detection error calculation unit
- 24: correction factor calculation unit
- U, V, W: coil
- UH, UL, VH, VL, WH, WL: switching element

## Claims

1. A motor control device (4) for controlling rotation of a rotor by controlling conduction of three-phase coils (U, V, W) of a brushless motor (1), wherein the motor control device (4) comprises:
a plurality of switching elements (UH, UL, VH, VL, WH, WL) arranged to be capable of switching a current flowing through the coils (U, V, W);
a plurality of sensors (3U, 3V, 3W) provided corresponding to the respective coils (U, V, W) to detect a rotation position of the rotor; and
a control unit (7) that outputs a drive signal for switching the switching elements (UH, UL, VH, VL, WH, WL) based on position detection signals that are outputs of the plurality of sensors (3U, 3V, 3W), **characterised in that** the control unit (7) comprises:
a gate control voltage output unit (8) that outputs a drive signal for switching the switching elements (UH, UL, VH, VL, WH, WL) based on the position detection signals that are corrected, and
a switching control unit (9) that causes the gate control voltage output unit (8) to output the drive signal based on each of the position detection signals that are corrected,
wherein the switching control unit (9) comprises:
a Hall pattern acquisition unit (9a) that acquires a next Hall pattern from a predetermined Hall pattern among six Hall patterns being combinations of potentials of the position detection signals that are the outputs of the plurality of sensors (3U, 3V, 3W),
a Hall pattern abnormality determination unit (9b) that determines whether the next Hall pattern is different from a first Hall pattern scheduled next to the predetermined Hall pattern, and
a Hall pattern abnormality count unit (9c) that counts a number of times the next Hall pattern is different from the first Hall pattern,
when the number of times the next Hall pattern is different from the first Hall pattern is less than or equal to a predetermined number of times of abnormality and a rotation speed of the rotor is being accclcratcd, correction is continued, and
when the number of times the next Hall pattern is different from the first Hall pattern is larger than the predetermined number of times of abnormality, or
when the number of times the next Hall pattern is different from the first Hall pattern is less than or equal to the predetermined number of times of abnormality and the rotation speed of the rotor is not being accelerated, the correction is suspended.

2. The motor control device (4) according to claim 1,
wherein the switching control unit (9)
comprises a Hall pattern normality count unit (9d) that counts a number of times the next Hall pattern coincides with the first Hall pattern, and
clears the number of times the next Hall pattern is different from the first Hall pattern, when the number of times the next Hall pattern coincides with the first Hall pattern is greater than a predetermined number of times of normality.

3. The motor control device (4) according to claim 1 or 2,
wherein the control unit (7) comprises:
the gate control voltage output unit (8) that outputs a drive signal for switching the switching elements (UH, UL, VH, VL, WH, WL) based on a corrected Hall edge configuring each of the six Hall stages represented by the combinations of the potentials of the position detection signals that are the outputs of the plurality of sensors (3U, 3V, 3W),
a counter value acquisition unit (20) that acquires, from the position detection signals, a counter value that is a time of the Hall stage represented by a time between two Hall edges configuring each of the Hall stages, and
the switching control unit (9) that uses a value obtained by multiplying a preset correction factor by each counter value of a previous Hall stage as a delay time of each current Hall edge and causes the gate control voltage output unit (8) to output the drive signal based on each Hall edge corrected using the delay time.

4. The motor control device (4) according to claim 3,
wherein the control unit (7) comprises:
a reference position detection signal determination unit (21) that sets a Hall edge, a counter value of which is reduced by widening the Hall edge in a rotation direction of the brushless motor (1), of two Hall edges configuring a Hall stage in which a counter value acquired by the counter value acquisition unit is the smallest, as a reference Hall edge, and determines the position detection signal corresponding to a phase in which the reference Hall edge is present as a reference position detection signal,
an average value calculation unit (22) that calculates an average value of counter values for three phases in the rotation direction of the brushless motor (1) of the reference position detection signal,
a detection error calculation unit (23) that calculates a detection error that is a difference between the average value and a counter value of each Hall stage, and
a correction factor calculation unit (24) that calculates the correction factor for each Hall stage by dividing the detection error by the average value.

5. The motor control device (4) according to claim 3 or 4, wherein the control unit (7) comprises a storage unit that stores the correction factor obtained by calculation of the correction factor performed before shipment of the motor control device (4).

6. A control method of a motor control device (4) for controlling rotation of a rotor by controlling conduction of three-phase coils (U, V, W) of a brushless motor (1), wherein the motor control device (4) comprises:
a plurality of switching elements (UH, UL, VH, VL, WH, WL) arranged to be capable of switching a current flowing through the coils (U, V, W),
a plurality of sensors (3U, 3V, 3W) provided corresponding to the respective coils (U, V, W) to detect a rotation position of the rotor, and
a control unit (7) that outputs a drive signal for switching the switching elements (UH, UL, VH, VL, WH, WL) based on position detection signals that are outputs of the plurality of sensors (3U, 3V, 3W), **characterised in that** the control unit (7) comprising:
a gate control voltage output unit (8) that outputs a drive signal for switching the switching elements (UH, UL, VH, VL, WH, WL) based on the position detection signals that are corrected, and
a switching control unit (9) that causes the gate control voltage output unit (8) to output the drive signal based on each of the position detection signals that are corrected,
the switching control unit (9) comprising:
a Hall pattern acquisition unit (9a) that acquires a next Hall pattern from a predetermined Hall pattern among six Hall patterns being combinations of potentials of the position detection signals that are the outputs of the plurality of sensors (3U, 3V, 3W),
a Hall pattern abnormality determination unit (9b) that determines whether the next Hall pattern is different from a first Hall pattern scheduled next to the predetermined Hall pattern, and
a Hall pattern abnormality count unit (9c) that counts a number of times the next Hall pattern is different from the first Hall pattern,
the control method comprising:
a correction suspension process in which correction is suspended when the number of times the next Hall pattern is different from the first Hall pattern is greater than a predetermined number of times of abnormality, or when a rotation speed of the rotor is not being accelerated even in a case that the number of times the next Hall pattern is different from the first Hall pattern is less than or equal to the predetermined number of times of abnormality.

## Patentansprüche

1. Motorsteuerungsvorrichtung (4) zum Steuern der Rotation eines Rotors durch Steuern des Leitvermögens von dreiphasigen Spulen (U, V, W) eines bürstenlosen Motors (1), wobei die Motorsteuerungsvorrichtung (4) umfasst:
eine Vielzahl von Schaltelementen (UH, UL, VH, VL, WH, WL), die so angeordnet sind, dass sie einen durch die Spulen (U, V, W) fließenden Strom schalten können;
eine Vielzahl von Sensoren (3U, 3V, 3W), die entsprechend den jeweiligen Spulen (U, V, W) vorgesehen sind, um eine Rotationsposition des Rotors zu erfassen; und
eine Steuereinheit (7), die ein Ansteuersignal zum Schalten der Schaltelemente (UH, UL, VH, VL, WH, WL) auf der Grundlage von Positionserfassungssignalen ausgibt, die von der Vielzahl von Sensoren (3U, 3V, 3W) ausgegeben werden,
**dadurch gekennzeichnet, dass** die Steuereinheit (7) umfasst:
eine Gate-Steuerspannungs-Ausgabeeinheit (8), die ein Ansteuersignal zum Schalten der Schaltelemente (UH, UL, VH, VL, WH, WL) auf der Grundlage von den Positionserfassungssignalen ausgibt, die korrigiert sind, und
eine Schaltsteuereinheit (9), die die Gate-Steuerspannungs-Ausgabeeinheit (8) veranlasst, das Ansteuersignal auf der Grundlage von jedem der Positionserfassungssignale, die korrigiert werden, auszugeben;
wobei die Schaltsteuereinheit (9) umfasst:
eine Hallmuster-Erkennungseinheit (9a), die ein nächstes Hallmuster aus einem vorbestimmten Hallmuster unter sechs Hallmustem erkennt, die Kombinationen von Potentialen der Positionserfassungssignale sind, die die Ausgaben der Vielzahl von Sensoren (3U, 3V, 3W) sind,
eine Hallmuster-Anomalie-Bestimmungseinheit (9b), die bestimmt, ob sich das nächste Hallmuster von einem ersten Hallmuster unterscheidet, das neben dem vorbestimmten Hallmuster geplant ist, und
eine Hallmusteranomalie-Zähleinheit (9c), die eine Anzahl der Male zählt, bei denen sich das nächste Hallmuster von dem ersten Hallmuster unterscheidet,
wobei, wenn die Anzahl der Male, bei denen sich das nächste Hallmuster von dem ersten Hallmuster unterscheidet, kleiner oder gleich einer vorbestimmten Anzahl von Malen von Abnormalität ist und eine Rotationsgeschwindigkeit des Rotors beschleunigt wird, die Korrektur fortgesetzt wird, und
wenn die Anzahl der Male, bei denen sich das nächste Hallmuster von dem ersten Hallmuster unterscheidet, größer ist als die vorbestimmte Anzahl von Malen von Abnormalität, oder
wenn die Anzahl der Male, bei denen sich das nächste Hallmuster von dem ersten Hallmuster unterscheidet, kleiner oder gleich der vorbestimmten Anzahl von Malen von Abnormalität ist und die Rotationsgeschwindigkeit des Rotors nicht beschleunigt wird, die Korrektur ausgesetzt wird.

2. Motorsteuerungsvorrichtung (4) gemäß Anspruch 1,
wobei die Schaltsteuereinheit (9) eine Hallmuster-Normalitäts-Zähleinheit (9d) umfasst, die eine Anzahl von Malen zählt, die das nächste Hallmuster mit dem ersten Hallmuster übereinstimmt, und
die Anzahl der Male, bei denen sich das nächste Hallmuster von dem ersten Hallmuster unterscheidet, löscht, wenn die Anzahl der Male, bei denen das nächste Hallmuster mit dem ersten Hallmuster übereinstimmt, größer ist als eine vorbestimmte Anzahl von Malen von Normalität.

3. Motorsteuerungsvorrichtung (4) gemäß Anspruch 1 oder 2, wobei die Steuereinheit (7) umfasst:
die Gate-Steuerspannungs-Ausgabeeinheit (8), die ein Ansteuersignal zum Schalten der Schaltelemente (UH, UL, VH, VL, WH, WL) auf der Grundlage einer korrigierten Hall-Flanke ausgibt, die jede der sechs Hall-Stufen konfiguriert, die durch die Kombinationen der Potentiale der Positionserfassungssignale dargestellt werden, die die Ausgaben der mehreren Sensoren (3U, 3V, 3W) sind,
eine Zählerwerterkennungseinheit (20), die aus den Positionserfassungssignalen einen Zählerwert erkennt, der eine Zeit der Hall-Stufe ist, die durch eine Zeit zwischen zwei Hall-Flanken dargestellt wird, die jede der Hall-Stufen konfigurieren, und
die Schaltsteuereinheit (9), die einen Wert, der durch Multiplizieren eines voreingestellten Korrekturfaktors mit jedem Zählerwert einer vorhergehenden Hall-Stufe erhalten wird, als eine Verzögerungszeit jeder aktuellen Hall-Flanke verwendet und die Gate-Steuerspannungs-Ausgabeeinheit (8) veranlasst, das Ansteuersignal auf der Grundlage von jeder Hall-Flanke, die unter Verwendung der Verzögerungszeit korrigiert wurde, auszugeben.

4. Motorsteuerungsvorrichtung (4) gemäß Anspruch 3, wobei die Steuereinheit (7) umfasst:
eine Referenzpositionserfassungssignal-Bestimmungseinheit (21), die eine Hall-Kante, deren Zählerwert durch Verbreiterung der Hall-Kante in einer Rotationsrichtung des bürstenlosen Motors (1) reduziert ist, von zwei Hall-Kanten, die eine Hall-Stufe konfigurieren, in der ein von der Zählerwerterkennungseinheit erkannter Zählerwert am kleinsten ist, als eine Referenz-Hall-Kante festlegt und das Positionserfassungssignal entsprechend einer Phase, in der die Referenz-Hall-Kante vorhanden ist, als ein Referenzpositionserfassungssignal bestimmt,
eine Mittelwertberechnungseinheit (22), die einen Mittelwert von Zählerwerten für drei Phasen in der Rotationsrichtung des bürstenlosen Motors (1) des Referenzpositionserfassungssignals berechnet,
eine Erfassungsfehler-Berechnungseinheit (23), die einen Erfassungsfehler berechnet, der ein Unterschied zwischen dem Durchschnittswert und einem Zählerwert jeder Hall-Stufe ist, und
eine Korrekturfaktor-Berechnungseinheit (24), die den Korrekturfaktor für jede Hall-Stufe berechnet, indem sie den Erfassungsfehler durch den Mittelwert dividiert.

5. Motorsteuerungsvorrichtung (4) gemäß Anspruch 3 oder 4, wobei die Steuereinheit (7) eine Speichereinheit umfasst, die den Korrekturfaktor speichert, der durch die Berechnung des Korrekturfaktors erhalten wird, die vor dem Versand der Motorsteuerungsvorrichtung (4) durchgeführt wird.

6. Steuerverfahren einer Motorsteuerungsvorrichtung (4) zum Steuern der Rotation eines Rotors durch Steuern des Leitvermögens von dreiphasigen Spulen (U, V, W) eines bürstenlosen Motors (1), wobei die Motorsteuerungsvorrichtung (4) umfasst:
eine Vielzahl von Schaltelementen (UH, UL, VH, VL, WH, WL), die so angeordnet sind, dass sie einen durch die Spulen (U, V, W) fließenden Strom schalten können;
eine Vielzahl von Sensoren (3U, 3V, 3W), die entsprechend den jeweiligen Spulen (U, V, W) vorgesehen sind, um eine Rotationsposition des Rotors zu erfassen; und
eine Steuereinheit (7), die ein Ansteuersignal zum Schalten der Schaltelemente (UH, UL, VH, VL, WH, WL) auf der Grundlage von Positionserfassungssignalen ausgibt, die von der Vielzahl von Sensoren (3U, 3V, 3W) ausgegeben werden,
**dadurch gekennzeichnet, dass** die Steuereinheit (7) umfasst:
eine Gate-Steuerspannungs-Ausgabeeinheit (8), die ein Ansteuersignal zum Schalten der Schaltelemente (UH, UL, VH, VL, WH, WL) auf der Grundlage von den Positionserfassungssignalen ausgibt, die korrigiert sind, und
eine Schaltsteuereinheit (9), die die Gate-Steuerspannungs-Ausgabeeinheit (8) veranlasst, das Ansteuersignal auf der Grundlage von jedem der Positionserfassungssignale, die korrigiert werden, auszugeben;
wobei die Schaltsteuereinheit (9) umfasst:
eine Hallmuster-Erkennungseinheit (9a), die ein nächstes Hallmuster aus einem vorbestimmten Hallmuster unter sechs Hallmustern erkennt, die Kombinationen von Potentialen der Positionserfassungssignale sind, die die Ausgaben der Vielzahl von Sensoren (3U, 3V, 3W) sind,
eine Hallmuster-Anomalie-Bestimmungseinheit (9b), die bestimmt, ob sich das nächste Hallmuster von einem ersten Hallmuster unterscheidet, das neben dem vorbestimmten Hallmuster geplant ist, und
eine Hallmusteranomalie-Zähleinheit (9c), die eine Anzahl der Male zählt, bei denen sich das nächste Hallmuster von dem ersten Hallmuster unterscheidet,
wobei das Steuerungsverfahren umfasst:
einen Korrekturaussetzprozess, bei dem die Korrektur ausgesetzt wird, wenn die Anzahl der Male, bei denen sich das nächste Hallmuster von dem ersten Hallmuster unterscheidet, größer ist als eine vorbestimmte Anzahl von Malen von Abnormalität, oder wenn eine Rotationsgeschwindigkeit des Rotors nicht beschleunigt wird, selbst in einem Fall, dass die Anzahl der Male, bei denen sich das nächste Hallmuster von dem ersten Hallmuster unterscheidet, kleiner als oder gleich der vorbestimmten Anzahl von Malen von Abnormalität ist.

## Revendications

1. Dispositif de commande de moteur (4) pour commander la rotation d'un rotor en commandant la conduction de bobines triphasées (U, V, W) d'un moteur sans balais (1), dans lequel le dispositif de commande de moteur (4) comprend :
une pluralité d'éléments de commutation (UH, UL, VH, VL, WH, WL) agencés pour être capables de commuter un courant circulant dans les bobines (U, V, W) :
une pluralité de capteurs (3U, 3V, 3W) prévus correspondant aux bobines respectives (U, V, W) pour détecter une position de rotation du rotor ; et
une unité de commande (7) qui délivre un signal d'entraînement pour commuter les éléments de commutation (UH, UL, VH, VL, WH, WL) sur la base de signaux de détection de position qui sont des sorties de la pluralité de capteurs (3U, 3V, 3W),
**caractérisé en ce que** l'unité de commande (7) comprend
une unité de sortie de tension de commande de grille (8) qui délivre un signal de commande pour commuter les éléments de commutation (UH, UL, VH, VL, WH, WL) sur la base des signaux de détection de position qui sont corrigés, et
une unité de commande de commutation (9) qui amène l'unité de sortie de tension de commande de grille (8) à émettre le signal de commande sur la base de chacun des signaux de détection de position qui sont corrigés,
dans lequel l'unité de commande de commutation (9) comprend :
une unité d'acquisition de modèle de Hall (9a) qui acquiert un prochain modèle de Hall à partir d'un modèle de Hall prédéterminé parmi six modèles de Hall étant des combinaisons des potentiels des signaux de détection de position qui sont les sorties de la pluralité de capteurs (3U, 3V, 3W), une unité de détermination d'anomalies de modèle de Hall (9b) qui détermine si le modèle de Hall suivant est différent d'un premier modèle de Hall programmé à côté du modèle de Hall prédéterminé, et
une unité de comptage d'anomalies du modèle de Hall (9c) qui compte un nombre de fois où le modèle de Hall suivant est différent du premier modèle de Hall,
lorsque le nombre de fois que le modèle de Hall suivant est différent du premier modèle de Hall est inférieur ou égal à un nombre prédéterminé d'anomalies et une vitesse de rotation du rotor s'accélèrent, la correction se poursuit, et
lorsque le nombre de fois que le prochain modèle de Hall est différent du premier modèle de Hall est supérieur au nombre prédéterminé de fois d'anomalies,
ou lorsque le nombre de fois que le prochain modèle de Hall est différent du premier modèle de Hall est inférieur ou égal au nombre d'anomalies prédéterminé et que la vitesse de rotation du rotor n'est pas accélérée, la correction est suspendue.

2. Dispositif de commande de moteur (4) selon la revendication 1, dans lequel l'unité de commande de commutation (9) comprend une unité de comptage de normalité de modèle de Hall (9d) qui compte un nombre de fois où le modèle de Hall suivant coïncide avec le premier modèle de Hall, et
efface le nombre de fois où le modèle de Hall suivant est différent du premier modèle de Hall, lorsque le nombre de fois où le modèle de Hall suivant coïncide avec le premier modèle de Hall est supérieur à un nombre prédéterminé de fois de normalité.

3. Dispositif de commande de moteur (4) selon la revendication 1 ou 2, dans lequel l'unité de commande (7) comprend :
l'unité de sortie de tension de commande de grille (8) qui délivre un signal de commande pour commuter les éléments de commutation (UH, UL, VH, VL, WH, WL) sur la base d'un front de Hall corrigé configurant chacun des six étages de Hall représentés par le des combinaisons des potentiels des signaux de détection de position qui sont les sorties de la pluralité de capteurs (3U, 3V, 3W), une unité d'acquisition de valeur de compteur (20) qui acquiert, à partir des signaux de détection de position, une valeur de compteur qui est un temps de l'étage de Hall représenté par un temps entre deux fronts de Hall configurant chacun des étages de Hall, et
l'unité de commande de commutation (9) qui utilise une valeur obtenue en multipliant un facteur de correction prédéfini par chaque valeur de compteur d'un étage de Hall précédent en tant que temps de retard de chaque front de Hall actuel et amène l'unité de sortie de tension de commande de grille (8) à délivrer le signal de commande sur la base de chaque front de Hall corrigé en utilisant le temps de retard.

4. Dispositif de commande de moteur (4) selon la revendication 3,
dans lequel l'unité de commande (7) comprend :
une unité de détermination de signal de détection de position de référence (21) qui établit un front de Hall, dont une valeur de compteur est réduite en élargissant le front de Hall dans un sens de rotation du moteur sans balais (1), de deux fronts de Hall configurant un étage de Hall dans lequel une valeur de compteur acquise par l'unité d'acquisition de valeur de compteur est la plus petite, en tant que front de Hall de référence, et détermine le signal de détection de position correspondant à une phase dans laquelle le front Hall de référence est présent en tant que signal de détection de position de référence,
une unité de calcul de valeur moyenne (22) qui calcule une valeur moyenne des valeurs du compteur pour trois phases dans le sens de rotation du moteur sans balais (1) du signal de détection de position de référence, une unité de calcul d'erreur de détection (23) qui calcule une erreur de détection qui est une différence entre la valeur moyenne et une valeur de comptage de chaque étage de Hall, et
une unité de calcul de facteur de correction (24) qui calcule le facteur de correction pour chaque étage de Hall en divisant l'erreur de détection par la valeur moyenne.

5. Dispositif de commande de moteur (4) selon la revendication 3 ou 4, dans lequel l'unité de commande (7) comprend une unité de mémorisation qui mémorise le facteur de correction obtenu par calcul du facteur de correction effectué avant l'expédition du dispositif de commande de moteur (4).

6. Procédé de commande d'un dispositif de commande de moteur (4) pour commander la rotation d'un rotor en commandant la conduction de bobines triphasées (U, V. W) d'un moteur sans balais (1), dans lequel le dispositif de commande du moteur (4) comprend :
une pluralité d'éléments de commutation (UH, UL, VH, VL, WH, WL) agencés pour être capables de commuter un courant circulant dans les bobines (U, V, W),
une pluralité de capteurs (3U, 3V, 3W) prévus correspondant aux bobines respectives (U, V, W) pour détecter une position de rotation du rotor, et une unité de commande (7) qui délivre un signal d'entraînement pour commuter la commutation des éléments (UH, UL, VH, VL, WH, WL) basés sur des signaux de détection de position qui sont des sorties de la pluralité de capteurs (3U, 3V, 3W),
**caractérisé en ce que** l'unité de commande (7) comprend
une unité de sortie de tension de commande de grille (8) qui délivre un signal de commande pour commuter les éléments de commutation (UH, UL, VH, VL, WH, WL) sur la base des signaux de détection de position qui sont corrigés, et
une unité de commande de commutation (9) qui amène l'unité de sortie de tension de commande de grille (8) à délivrer le signal d'entraînement sur la base de chacun des signaux de détection de position qui sont corrigés, l'unité de commande de commutation (9) comprenant :
une unité d'acquisition de modèle de Hall (9a) qui acquiert un modèle de Hall suivant à partir d'un modèle de Hall prédéterminé parmi six modèles de Hall étant des combinaisons des potentiels des signaux de détection de position qui sont les sorties de la pluralité de capteurs (3U, 3V, 3W),
une unité de détermination d'anomalies de modèle de Hall (9b) qui détermine si le modèle de Hall suivant est différent d'un premier modèle de Hall programmé à côté du modèle de Hall prédéterminé, et
une unité de comptage d'anomalies de modèle de Hall (9c) qui compte un nombre de fois que le prochain modèle Ce Hall est différent du premier modèle de Hall,
le procédé de commande comprenant :
un processus de suspension de correction dans lequel la correction est suspendue lorsque le nombre de fois que le modèle de Hall suivant est différent du premier modèle de Hall est supérieur à un nombre prédéterminé de fois d'anomalies, ou lorsqu'une vitesse de rotation du rotor n'est pas accélérée même dans un cas où le nombre de fois que le prochain modèle de Hall est différent du premier motif de Hall est inférieur ou égal au nombre prédéterminé d'anomalies.
